# EUROPEAN PATENT SPECIFICATION

(11) **EP 3 835 182 B1**
(45) Date of publication and mention of the grant of the patent: **16.10.2024**
(21) Application number: 20212260.2
(22) Date of filing: 07.12.2020
(51) Int. Cl.: B62H 1/02, B62H 5/04, B62H 5/14, B62H 5/18, B62J 45/413, B62J 45/42, B62L 3/02, B62L 3/04, B62L 3/08

(54) **LEAN VEHICLE**
NEIGEFAHRZEUG
VÉHICULE À INCLINAISON

(30) Priority: 11.12.2019 JP 2019223702
(43) Date of publication of application: 16.06.2021
(73) Proprietor: Kawasaki Motors, Ltd., Akashi-shi, Hyogo 673-8666 (JP)
(72) Inventor: KAWAI, Daisuke, Hyogo, 650-8670 (JP)
(74) Representative: Witte, Weller & Partner Patentanwälte mbB

(56) References cited:
- JP-A- 2005 059 741
- JP-A- 2009 269 470
- JP-A- 2010 076 658
- JP-A- S62 258 876

## Description

### 1. Field of the Invention

The present invention relates to a lean vehicle including a stand which makes the vehicle stand by itself when the vehicle is in a stop state.

### 2. Description of the Related Art

Conventionally, some of lean vehicles, such as motorcycles, include parking brakes. For example, Japanese Patent No. 6,228,092 discloses a lean vehicle including a parking brake.

According to the lean vehicle disclosed in Japanese Patent No. 6,228,092, when operating the parking brake after the vehicle is stopped, an input operation is performed with respect to a parking lever. When the input operation of the parking lever is performed, the parking brake sandwiches a brake disc, and this locks the rotation of a wheel. Moreover, when the vehicle travels, a rider releases the parking brake. When the rider releases the parking brake, the operation of returning the parking lever to an original position is performed, and this releases the lock of the rotation of the wheel.

When the rider restarts driving the vehicle after the vehicle is stopped, both the step of releasing the parking brake and the step of flipping up a stand which makes the vehicle stand by itself are performed. Therefore, to restart driving the vehicle after the vehicle is stopped, the rider needs to perform the step of releasing the parking brake and the step of flipping up the stand, and therefore, the rider cannot smoothly drive the vehicle.

JP 2010 076658 A discloses a braking device for a saddle-riding type vehicle. The braking device includes: a rear disc brake, a wheel restriction means for restricting turning of the rear wheel separately from the rear disc brake, a side stand for standing the saddle-riding type vehicle itself; and a turning position detection means for detecting a turning position of the side stand. The braking device further includes: an actuator for driving the wheel restriction means, and a control means for controlling the actuator such that the wheel restriction means restricts the rear wheel or does not restrict the rear wheel based on the turning position of the side stand detected with the turning position detection means.

JP 2005 059741 A discloses a lean vehicle according to the preamble of claim 1.

Further exemplary lean vehicles are known from JP 2009 269470 A and JP S62 258876 A.

### SUMMARY OF THE INVENTION

A lean vehicle according to claim 1 includes: a driving preventing device configured to switch between a driving enabled state in which normal driving of the vehicle is being enabled and a driving disabled state in which the normal driving of the vehicle is being disabled; a stand including an end portion and configured to swing between a landed state in which the end portion is in contact with a ground surface and a flip-up state and, in the landed state, make the vehicle stand by itself while the vehicle is in a stop state; and an operation piece that is movable between a driving enabled position and a driving disabled position and sets the driving preventing device to the driving enabled state when the operation piece is at the driving enabled position and sets the driving preventing device to the driving disabled state when the operation piece is at the driving disabled position. When the stand is in the landed state, the operation piece is allowed to move between the driving enabled position and the driving disabled position, thereby allowing the driving preventing device to be switched between the driving enabled state and the driving disabled state. When the stand is in the flip-up state, the operation piece interferes with the stand to be maintained at the driving enabled position, thereby maintaining the driving preventing device in the driving enabled state. When the operation piece is at the driving disabled position, the operation piece interferes with the stand in such a way that the operation piece serves as a stopper which blocks the movement of the stand, thereby preventing the stand from becoming the flip-up state.

According to the above configuration, when the rider sets the stand to the landed state at the time of parking, the driving preventing device is allowed to be set to the driving disabled state or the driving enabled state. Therefore, the state of the driving preventing device at the time of parking can be selected in accordance with preference of the rider or a situation. Then, when the rider sets the stand to the flip-up state to start driving the motorcycle, the driving preventing device is maintained in the driving enabled state, and therefore, the rider can smoothly drive the motorcycle.

### BRIEF DESCRIPTION OF THE DRAWINGS

FIG 1 is a side view showing that a stand bar and an operation piece are in a flipped-up state in a motorcycle according to Embodiment 1 which is not claimed.
FIG 2 is a side view showing that the stand bar and the operation piece are in a put-down state, and the stand bar is in a landed state in the motorcycle shown in FIG 1.
FIG 3 is a schematic configuration diagram showing a parking brake used in the motorcycle shown in FIG 1.
FIG 4 is a schematic configuration diagram showing a modified example of the parking brake used in the motorcycle shown in FIG 1.
FIG 5 is a side view showing that the stand bar is in a flipped-up state in the motorcycle according to Embodiment 2 which is a claimed embodiment of the invention.
FIG 6A is a schematic configuration diagram showing that the stand bar is in a put-down state, and the parking brake is in a non-operating state in the motorcycle shown in FIG 5. FIG 6B is a schematic configuration diagram showing that the stand bar is in a put-down state, and the parking brake is in an operating state in the motorcycle shown in FIG 5.
FIG 7A is a schematic configuration diagram showing a side stand including the stand bar in a landed state and its periphery in the motorcycle according to Embodiment 3 which is not claimed. FIG. 7B is a schematic configuration diagram showing the side stand including the stand bar in a floating state and its periphery in the motorcycle according to Embodiment 3 which is not claimed.
FIG 8A is a schematic plan view showing that the stand bar is in a flipped-up state in the motorcycle shown in FIGS. 7A and 7B. FIG 8B is a side view showing the side stand in a landed state and its periphery in the motorcycle shown in FIGS. 7A and 7B.
FIG 9A is a side view showing a front wheel in the motorcycle according to another embodiment which is claimed.
FIG. 9B is a schematic sectional view showing a lock mechanism for the front wheel shown in FIG 9A.

### DESCRIPTION OF THE PREFERRED EMBODIMENTS

Hereinafter, motorcycles according to embodiments will be described with reference to the attached drawings. It should be noted that directions stated in the following description correspond to directions viewed from a rider who is riding a motorcycle.

### Embodiment 1 (not claimed)

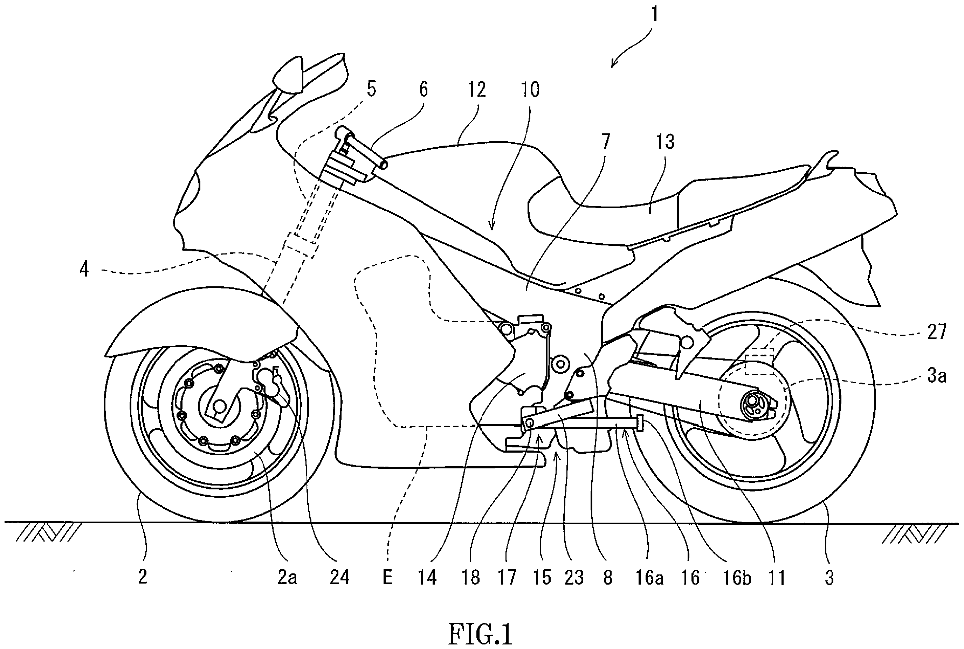

FIG 1 is a side view showing the motorcycle 1. The motorcycle 1 is one type of lean vehicle. In the present description, the "lean vehicle" denotes a vehicle, such as a motorcycle or a motor tricycle, which leans its vehicle body to make a turn.

As shown in FIG 1, the motorcycle 1 includes a front wheel 2 and a rear wheel 3. The front wheel 2 is connected to a front fork 4. The front fork 4 is supported by a steering shaft (not shown) rotatably supported by a head pipe 5. A bar handle 6 held by a rider is attached to the steering shaft so as to extend to the left and the right in a substantially vehicle width direction. In order to steer the motorcycle 1, the handle 6 is turned by an operation of the rider through the steering shaft to steer the front wheel 2.

A pair of left and right main frames 7 extend rearward from the head pipe 5 while inclining downward. A pivot frame 8 is connected to rear portions of the main frames 7. To be specific, the head pipe 5, the main frames 7, and the pivot frame 8 constitute a vehicle body frame 10. A front end portion of a swing arm 11 is pivotally supported by the pivot frame 8, and the rear wheel 3 is pivotally supported by a rear end portion of the swing arm 11. A fuel tank 12 is arranged behind the handle 6. A seat 13 straddled and ridden by the rider is arranged behind the fuel tank 12.

The rider drives the motorcycle 1 with inner surfaces of his/her legs sandwiching a rear portion of the fuel tank 12. An engine (prime mover) E supported by the main frames 7 and the pivot frame 8 is arranged between the front wheel 2 and the rear wheel 3. A transmission 14 is connected to an output shaft of the engine E. Driving force output from the transmission 14 is transmitted to the rear wheel 3 through a chain or a belt. The pivot frame 8 of the vehicle body frame 10 is provided with a side stand 15.

Front wheel brake discs 2a are provided at both left and right sides of the front wheel 2. Front wheel brake calipers 24 are provided at such positions of the front fork 4 as to be able to contact the respective front wheel brake discs 2a. The front wheel brake calipers 24 are supported by the front fork 4. A piston (not shown) of each front wheel brake caliper 24 is pressed against the corresponding front wheel brake disc 2a by hydraulic pressure, and this can generate braking force.

A rear wheel brake disc 3a is provided at a right side of the rear wheel 3. A rear wheel brake caliper 27 is provided at a position in the vicinity of the rear end portion of the swing arm 11. The rear wheel brake caliper 27 is supported by the swing arm 11. A piston (not shown) of the rear wheel brake caliper 27 is pressed against the rear wheel brake disc 3a by hydraulic pressure, and this can generate the braking force.

The side stand 15 includes a stand bar 16 and a supporting portion 17 supporting the stand bar 16 such that the stand bar 16 is swingable. The supporting portion 17 includes a spring (not shown) and the like by which the position of the stand bar 16 is set to a landed state or a flip-up state. The stand bar 16 includes a stand bar main body 16a and an end portion 16b which contacts a ground surface when the stand bar 16 is landed. The stand bar 16 is attached to the pivot frame 8 so as to be turnable about a rotating shaft 18. The stand bar 16 turns about the rotating shaft 18 to swing between the landed state and the flip-up state. FIG 1 shows the motorcycle 1 including the stand bar 16 which is in the flip-up state.

The stand bar 16 turns about the rotating shaft 18 from the state shown in FIG 1 in a direction toward the ground surface. When the end portion 16b reaches a position close to the ground surface, the stand bar 16 contacts a stopper (not shown), and the turn of the stand bar 16 is stopped by the stopper. With the stand bar 16 located at the position (use position) close to the ground surface, the motorcycle 1 is inclined such that the end portion 16b is brought into contact with the ground surface. With this, the stand bar 16 supports the motorcycle 1 such that the motorcycle 1 does not fall down with the end portion 16b contacting the ground surface. Thus, the stand bar 16 is landed on the ground surface (landed state), and this maintains a self-standing state of the motorcycle 1. The landed state in which the stand bar 16 is being landed is also referred to as the landed state of the side stand 15.

The motorcycle 1 is made to stand by itself in such a manner that the motorcycle 1 is inclined, and the stand bar 16 is set to the landed state. Therefore, without changing the stand bar 16 from the landed state to the flip-up state, the rider can make the motorcycle 1 stand upright and push and move the motorcycle 1 with his/her hands with the stand bar 16 floating. On this account, for example, when moving the motorcycle 1 by a short distance, the stand bar 16 does not have to be changed from the landed state to the flip-up state. Thus, the operation of the side stand 15 by the rider can be omitted, and the complication of the operation of the rider can be eliminated.

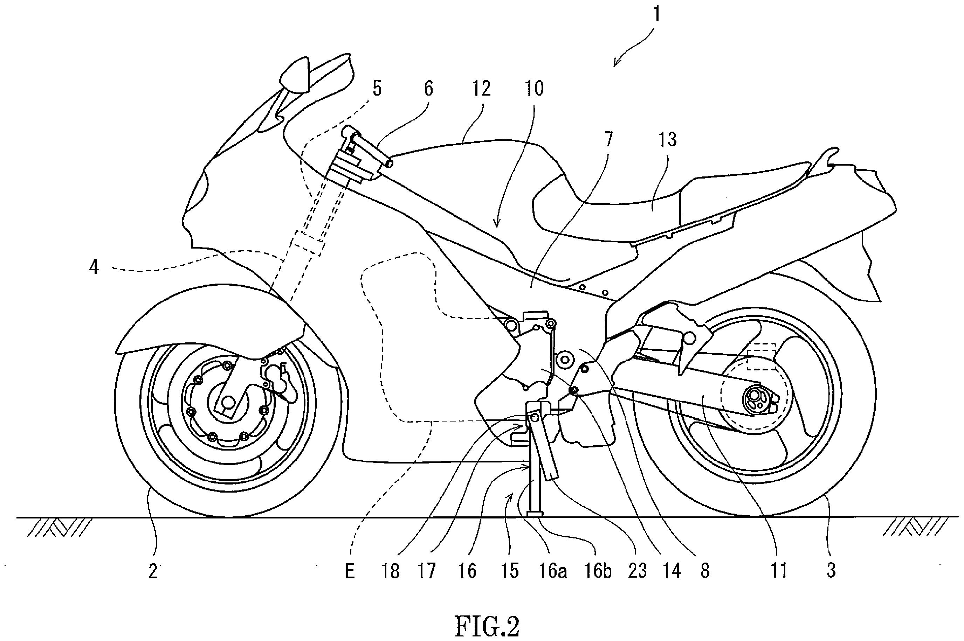

FIG 2 is a side view showing the motorcycle 1 including the stand bar 16 which is in the landed state. By bringing the end portion 16b of the stand bar 16 into contact with the ground surface, the stand bar 16 supports the motorcycle 1, and therefore, the motorcycle 1 stands by itself. For example, when the rider stops and leaves the motorcycle 1, the rider changes the stand bar 16 from the flip-up state to the landed state, and this can make the motorcycle 1 stand by itself.

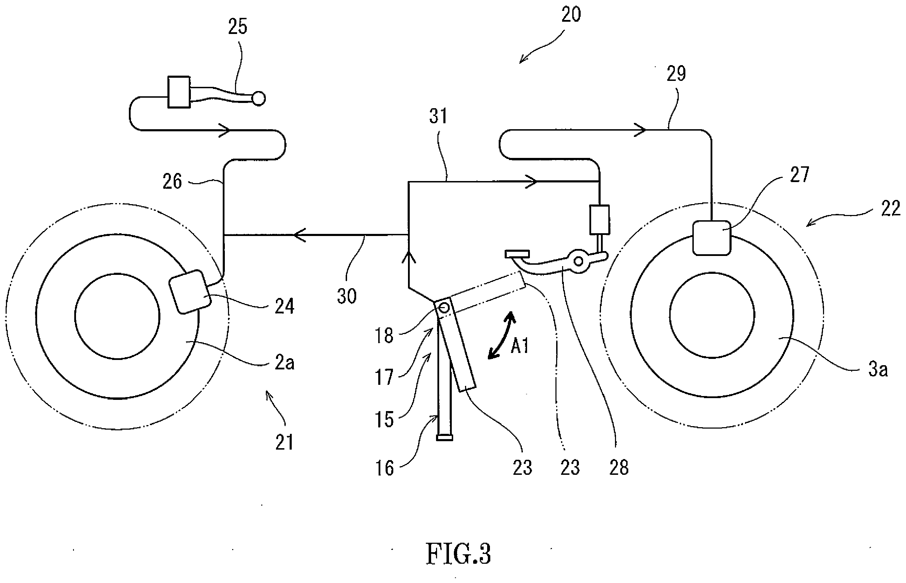

In the present embodiment, the motorcycle 1 includes a parking brake (driving preventing device). FIG 3 is a configuration diagram schematically showing the configuration of a parking brake 20 of the motorcycle 1 of the present embodiment. As shown in FIG 3, the parking brake 20 includes a front wheel brake 21, a rear wheel brake 22, and an operation piece 23. The front wheel brake 21 decelerates or stops the rotation of the front wheel 2, and the rear wheel brake 22 decelerates or stops the rotation of the rear wheel 3.

The front wheel brake 21 includes the front wheel brake calipers 24, a front wheel brake lever 25, and a wire 26 connecting the front wheel brake calipers 24 and the front wheel brake lever 25. The front wheel brake lever 25 is provided at a position in the vicinity of the handle so as to be operated by the rider's hand. As described above, by the input operation of the front wheel brake lever 25, the front wheel brake calipers 24 are pressed against the respective front wheel brake discs 2a of the front wheel 2 to generate the braking force.

The rear wheel brake 22 includes the rear wheel brake caliper 27, a rear wheel brake lever 28, and a wire 29 connecting the rear wheel brake caliper 27 and the rear wheel brake lever 28. The rear wheel brake lever 28 is provided at a position in the vicinity of a pedal (not shown) so as to be operated by the rider's foot. As described above, by the input operation of the rear wheel brake lever 28, the rear wheel brake caliper 27 is pressed against the rear wheel brake disc 3a to generate the braking force.

The operation piece 23 swings in a direction shown by an arrow A1 in FIG 3 to move between a flip-up state in which the operation piece 23 is being flipped up and a put-down state in which the operation piece is being put down. In FIG 3, the operation piece 23 in the flip-up state is shown by a broken line, and the operation piece 23 in the put-down state is shown by a solid line. The operation piece 23 is configured to be turnable about the rotating shaft 18. In the present embodiment, the rotating shaft 18 of the operation piece 23 and the rotating shaft 18 of the stand bar 16 are common to each other. Therefore, the side stand 15 and the operation piece 23 are configured such that the rotating shaft 18 of the operation piece 23 and the rotating shaft 18 of the stand bar 16 are coaxial with each other. In the present embodiment, a rotation axis of the rotating shaft 18 of the operation piece 23 and a rotation axis of the rotating shaft 18 of the stand bar 16 are coaxially configured so as to coincide with each other. However, an outer tube that is one of the shaft of the operation piece 23 and the shaft of the stand bar 16 may be externally fitted to an inner tube that is the other of the shaft of the operation piece 23 and the shaft of the stand bar 16 such that the operation piece 23 and the stand bar 16 rotate independently.

The parking brake 20 includes wires 30 and 31. The wire 30 connects the operation piece 23 and the wire 26, and the wire 31 connects the operation piece 23 and the wire 29. When the operation piece 23 is set to the put-down state, the wires 30 and 31 are pulled. When the wire 30 is pulled, the front wheel brake calipers 24 are pressed against the respective front wheel brake discs 2a, and this stops the rotation of the front wheel 2. Similarly, when the wire 31 is pulled, the rear wheel brake caliper 27 is pressed against the rear wheel brake disc 3a, and this stops the rotation of the rear wheel 3. With this, for example, when the motorcycle 1 is stopped, the rotations of the front wheel 2 and the rear wheel 3 can be locked.

As above, the rotations of the front wheel 2 and the rear wheel 3 are locked. Therefore, it is possible to prevent a case where when the motorcycle 1 is stopped on a slope or the like, the front wheel 2 and the rear wheel 3 abruptly roll, i.e., the motorcycle 1 in a stop state unexpectedly moves. Moreover, since the rotations of the front wheel 2 and the rear wheel 3 are locked, the motorcycle 1 can be set to a driving disabled state in which normal driving of the motorcycle 1 is being disabled, and the motorcycle 1 can be prevented from being stolen while the motorcycle 1 is in the stop state.

On the other hand, when the operation piece 23 is set to the flip-up state, the lock of the rotation of the front wheel 2 by the pressing of the front wheel brake calipers 24 against the front wheel brake discs 2a is released, and the lock of the rotation of the rear wheel 3 by the pressing of the rear wheel brake caliper 27 against the rear wheel brake disc 3a is released. As a result, the lock of the rotation of the front wheel 2 and the lock of the rotation of the rear wheel 3 are released, and thus, the parking brake 20 is released. As above, when the operation piece 23 is set to the flip-up state, the parking brake 20 becomes a non-operating state, and the motorcycle 1 becomes a driving enabled state. To be specific, the parking brake 20 can serve as the driving preventing device capable of switching between the driving enabled state in which the normal driving of the motorcycle 1 is being enabled and the driving disabled state in which the normal driving of the motorcycle 1 is being disabled.

In the present embodiment, when the stand bar 16 is in the landed state, the operation piece 23 is operated between the flip-up state and the put-down state. In FIG 3, a direction in which the operation piece 23 can move when the stand bar 16 is in the landed state is shown by the arrow A1. When the stand bar 16 is in the landed state, the operation piece 23 can move in a direction shown by the arrow A1 in FIG 3 between a state in which the operation piece 23 is being flipped up and a state in which the operation piece 23 is being put down. When the operation piece 23 is in each of the flip-up state and the put-down state, the operation piece 23 is arranged at a flip-up side of the stand bar 16 which is in the put-down state. When viewed from the stand bar 16 which is in the put-down state, the operation piece 23 is arranged at the flip-up side on a turn trajectory of the stand bar 16.

When the stand bar 16 is in the landed state, the operation piece 23 can move between the flip-up state and the put-down state. Therefore, the parking brake 20 can be switched between an operating state and a released state. On this account, the motorcycle 1 is switched between the driving enabled state and the driving disabled state.

According to the above-described configuration, in the motorcycle 1, when the stand bar 16 is in the landed state, and therefore, the side stand 15 is in the landed state, the parking brake 20 can be operated to set the motorcycle 1 to the driving disabled state or the driving enabled state. Therefore, for example, when the motorcycle is being parked, the state of the parking brake 20 can be selected in accordance with preference of the rider or a situation. On this account, choices made by the rider when the motorcycle 1 is in the stop state increase, and therefore, the motorcycle 1 having excellent usability can be provided. For example, when the rider wants to move the motorcycle 1 by a short distance after the motorcycle 1 is stopped, the rider can release the parking brake 20 and then move the motorcycle 1. After the motorcycle 1 reaches a desired position, the rider can operate the parking brake 20 again to lock the rotations of the front wheel 2 and the rear wheel 3. Thus, the motorcycle 1 can be continuously stopped thereat.

The motorcycle 1 is configured such that when the stand bar 16 is set to the flip-up state, the parking brake 20 becomes the released state. On this account, when the stand bar 16 is in the flip-up state, the parking brake 20 is surely in the released state, and therefore, the rider can smoothly drives the motorcycle 1 without confusion. Moreover, as described above, the parking brake 20 is surely in the released state when the stand bar 16 is in the flip-up state. Therefore, when the stand bar 16 is flipped up in order that the rider starts driving the motorcycle 1, it is certain that the parking brake 20 is not operating. On this account, it is possible to prevent a case where the parking brake 20 is mistakenly in the operating state when the rider starts driving the motorcycle 1. Moreover, it is unnecessary to inform the rider that the rider is about to start driving the motorcycle 1 with the parking brake 20 in the operating state. Therefore, the motorcycle 1 is not required to be provided with a device, such as a lamp or an alarm sound generator, which informs the rider that the rider is about to start driving the motorcycle 1 with the parking brake 20 in the operating state. With this, such device can be omitted from the motorcycle 1, and this can reduce the manufacturing cost of the motorcycle 1.

Moreover, in the present embodiment, the motorcycle 1 is configured such that when the stand bar 16 is changed from the landed state to the flip-up state, the parking brake 20 is switched to release the lock of the rotations of the front wheel 2 and the rear wheel 3 in association with the operation of the stand bar 16. Therefore, when the stand bar 16 is changed from the landed state to the flip-up state, the motorcycle 1 is automatically switched to the driving enabled state without the operation of the operation piece 23 by the rider. On this account, since the rider can set the motorcycle 1 to the driving enabled state only by changing the stand bar 16 from the landed state to the flip-up state, the labor of the rider can be reduced, and the motorcycle 1 having excellent usability can be provided.

Moreover, in the present embodiment, the rotating shaft 18 corresponding to a rotational center when the stand bar 16 rotates and moves and the rotating shaft 18 corresponding to a rotational center when the operation piece 23 rotates and moves are coaxial with each other. Therefore, the rider can easily and simultaneously operate the stand bar 16 and the operation piece 23. Thus, the usability of the motorcycle 1 can be further improved.

The above embodiment describes the motorcycle 1 configured such that the rotating shaft 18 of the stand bar 16 and the rotating shaft 18 of the operation piece 23 are coaxial with each other. However, the above embodiment is not limited to this. The motorcycle may be configured such that the rotating shaft of the stand bar 16 and the rotating shaft of the operation piece 23 may be provided at different positions.

Moreover, the above embodiment describes that: the parking brake 20 includes the wires 30 and 31; and when the operation piece 23 is set to the put-down state, the wire 30 and the wire 31 are pulled, and with this, the parking brake 20 is switched to the operating state. However, the above embodiment is not limited to this. The parking brake 20 may be switched to the operating state or the non-operating state through the other method. One example may be such that: the parking brake includes an ECU capable of setting each of the front wheel brake calipers 24 and the rear wheel brake caliper 27 to the operating state or the non-operating state; and when the operation piece 23 is set to the put-down state, a signal indicating that the operation piece 23 is in the put-down state is transmitted to the ECU, and the ECU sets each of the front wheel brake calipers 24 and the rear wheel brake caliper 27 to the operating state.

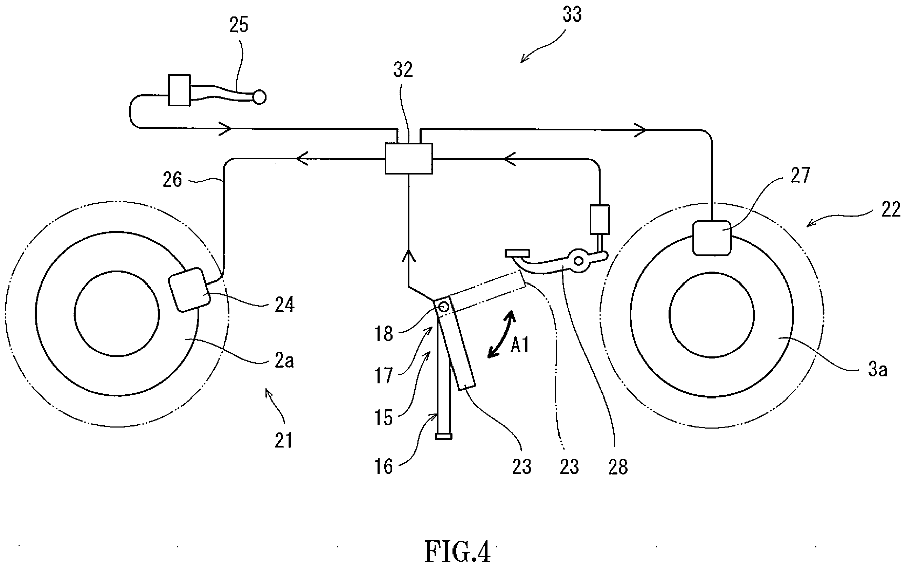

FIG 4 is a configuration diagram schematically showing the configuration of a parking brake 33 including an ECU 32. The ECU 32 may have a function of controlling the braking force generated by the front wheel brake calipers 24 and the rear wheel brake caliper 27 through an ABS (antilock brake system).

When the operation piece 23 is set to the put-down state, a signal indicating that the operation piece 23 is in the put-down state is transmitted to the ECU 32. When the ECU 32 receives the signal indicating that the operation piece 23 is in the put-down state, the ECU 32 makes the front wheel brake calipers 24 and the rear wheel brake caliper 27 generate the braking force. Therefore, by setting the operation piece 23 to the put-down state, the front wheel brake calipers 24 are pressed against the respective front wheel brake discs 2a, and the rear wheel brake caliper 27 is pressed against the rear wheel brake disc 3a. Thus, the rotations of the front wheel 2 and the rear wheel 3 can be locked.

The above embodiments describe that when the parking brake (20, 33) is operated, both the front wheel brake 21 and the rear wheel brake 22 are operated, and both the front wheel 2 and the rear wheel 3 are locked. However, the above embodiments are not limited to this. For example, when the parking brake (20, 33) is operated, one of the rotation of the front wheel 2 and the rotation of the rear wheel 3 may be locked. In this case, the parking brake (20, 33) may lock the rotation of the front wheel 2 or may lock the rotation of the rear wheel 3.

### Embodiment 2 (claimed)

Next, the motorcycle according to Embodiment 2 will be described. It should be noted that explanations of components that are the same as those of Embodiment 1 are omitted, and only components that are different from those of Embodiment 1 will be described. Embodiment 1 describes the motorcycle configured such that the stand bar 16 and the operation piece 23 are operated substantially simultaneously. The motorcycle of Embodiment 2 is different form the motorcycle of Embodiment 1 in that: the motorcycle of Embodiment 2 includes a mechanism which does not allow the setting of the stand bar 16 to the flip-up state when a parking brake 20a is not in the released state; and the operation piece which switches the parking brake between the operating state and the non-operating state and the stand bar 16 are not operated simultaneously.

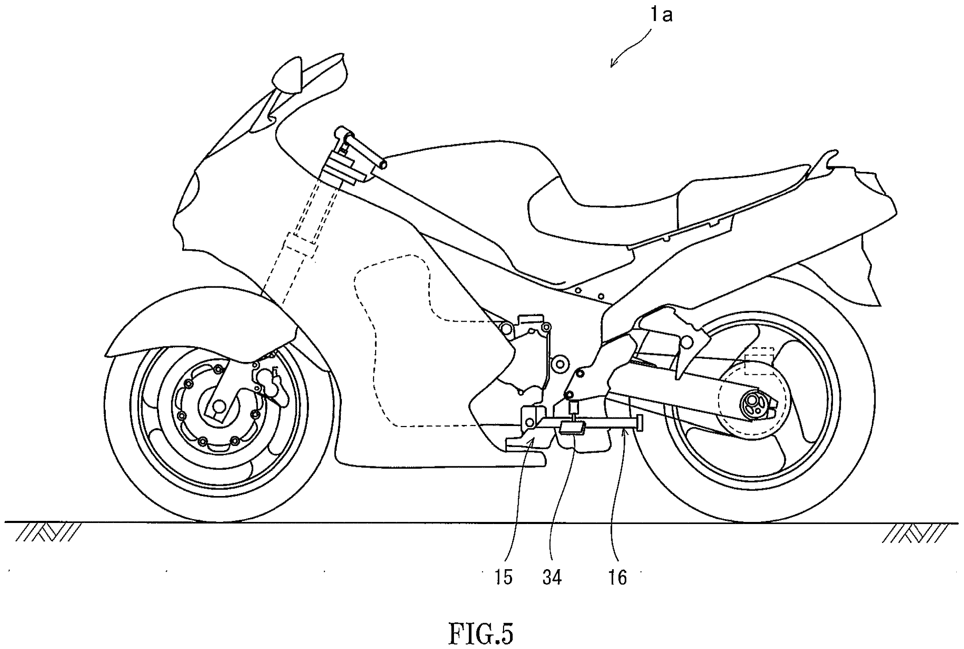

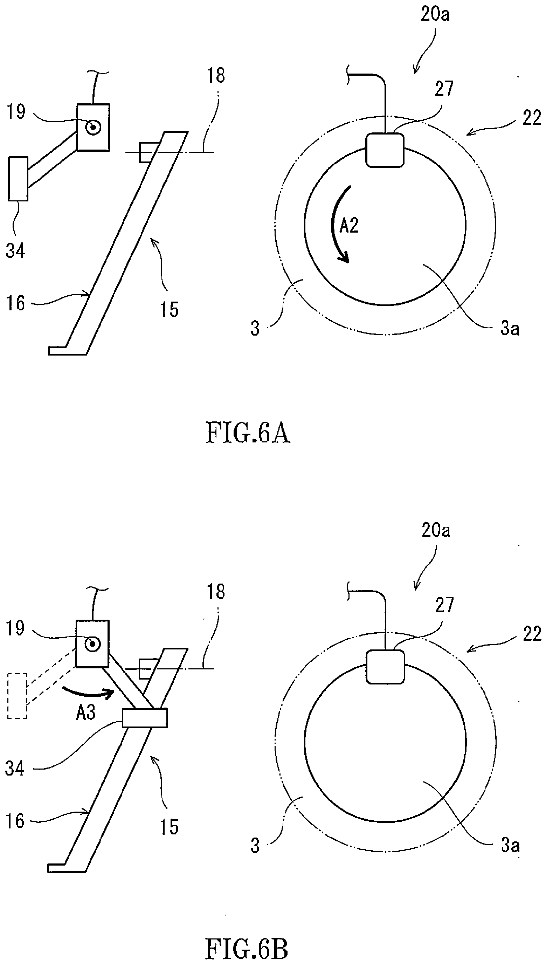

FIG 5 is a side view showing a motorcycle 1a of Embodiment 2. The motorcycle 1a includes an operation piece 34 capable of switching the parking brake 20a between the operating state and the non-operating state. FIGS. 6A and 6B are schematic configuration diagrams showing the side stand 15, the operation piece of the parking brake 20a, the rear wheel brake 22, and their peripheries. Each of FIGS. 6A and 6B includes a diagram showing the side stand 15, the operation piece 34, and their peripheries when viewed from a rear side of the motorcycle 1a and a diagram showing the rear wheel brake 22 and its periphery when viewed from a lateral side of the motorcycle 1a. FIG 6A shows the motorcycle 1a in which the stand bar 16 is in the landed state, and the parking brake 20a is in the non-operating state. FIG 6B shows the motorcycle 1a in which the stand bar 16 is in the landed state, and the parking brake 20a is in the operating state. In Embodiment 2, when the parking brake 20a is operated, the rear wheel brake caliper 27 is pressed against the rear wheel brake disc 3a, and therefore, the braking force is generated only at the rear wheel brake 22.

As shown in FIG 6A, the stand bar 16 of the side stand 15 can turn about the rotating shaft 18. Moreover, the operation piece 34 of the parking brake 20a can turn about a rotating shaft 19. As shown in FIG 6A, when the parking brake 20a is in the non-operating state, the operation piece 34 is arranged at a position away from the stand bar 16 in an axial direction of the rotating shaft 18 of the stand bar 16. In the state shown in FIG 6A, the parking brake 20a is in the non-operating state, and therefore, the rear wheel brake caliper 27 does not contact the rear wheel brake disc 3a, and the rear wheel 3 can rotate in a direction shown by an arrow A2 or its opposite direction.

In the present embodiment, as shown in FIGS. 6A and 6B, since the rotating shaft 18 of the stand bar 16 and the rotating shaft 19 of the operation piece 34 are not coaxial with each other, the operation piece 34 of the parking brake and the stand bar 16 are operated separately at different timings.

When the operation piece 34 is pushed inward from the state shown in FIG 6A to be arranged at such a position as to interfere with the stand bar 16 as shown in FIG 6B, the parking brake 20a becomes the operating state. At this time, the rear wheel brake caliper 27 is pressed against the rear wheel brake disc 3a, and this locks the rotation of the rear wheel 3. Therefore, the rear wheel 3 does not rotate in the direction shown by the arrow A2 or its opposite direction. When the operation piece 34 moves from the state shown in FIG 6A to the state shown in FIG 6B, the operation piece 34 rotates about the rotating shaft 19 to move in a direction shown by an arrow A3 in FIG 6B.

When the operation piece 34 moves from the state shown in FIG 6A to the state shown in FIG 6B in order to set the parking brake 20a to the operating state, the operation piece 34 is arranged at such a position as to interfere with the stand bar 16, and therefore, the stand bar 16 is not allowed to rotate about the rotating shaft 18. To be specific, the operation piece 34 and the stand bar 16 are configured such that when the parking brake 20a is set to the operating state by operating the operation piece 34, the operation piece 34 interferes with the stand bar 16, and therefore, the stand bar 16 is not allowed to swing to become the flip-up state. When the operation piece 34 is pushed inward to be arranged at the position shown in FIG 6B, the operation piece 34 serves as a stopper which blocks the movement of the stand bar 16.

In the present embodiment, when setting the stand bar 16 to the flip-up state, the stand bar 16 rotates about the rotating shaft 18 from the state shown in FIG 6A in a direction toward the flip-up side, i.e., the stand bar 16 is moving upward. On this account, while the stand bar 16 is in the flip-up state, the stand bar 16 interferes with the operation piece 34, and the operation piece 34 cannot be pushed inward in the direction shown by the arrow A3 in FIG 6B. Thus, while the stand bar 16 is in the flip-up state, the parking brake 20a cannot be set to the operating state.

The operation piece 34 and the side stand 15 are configured as above. Therefore, when the stand bar 16 is in the landed state, the operation piece 34 can be pushed inward. On the other hand, the motorcycle 1a is configured such that: when setting the stand bar 16 to the flip-up state, the operation piece 34 needs to be arranged at the position shown in FIG 6A, and the parking brake 20a needs to be set to the non-operating state; and in addition, while the stand bar 16 is in the flip-up state, the operation piece 34 cannot be pushed inward, and the parking brake 20a cannot be set to the operating state. Therefore, when the stand bar 16 is in the flip-up state, the parking brake 20a is maintained in the non-operating state. The motorcycle 1a is configured as above, and therefore, when the stand bar 16 is in the landed state, the parking brake 20a can be switched between the operating state and the non-operating state. On the other hand, when the side stand 15 is in the flip-up state, the parking brake 20a is maintained in the non-operating state.

According to the above-described configuration, the motorcycle 1a is configured such that when the stand bar 16 is in the landed state, the motorcycle 1a can be set to the driving disabled state or the driving enabled state by the parking brake 20a. Therefore, for example, when the motorcycle is parked, the state of the parking brake 20a can be selected in accordance with preference of the rider or a situation. When the stand bar 16 is in the flip-up state, the parking brake 20a is surely in the released state, and therefore, the rider can smoothly drives the motorcycle 1a without confusion.

### Embodiment 3 (not claimed)

Next, the motorcycle according to Embodiment 3 will be described. It should be noted that explanations of components that are the same as those of Embodiments 1 and 2 are omitted, and only components that are different from those of Embodiments 1 and 2 will be described. In Embodiments 1 and 2, the parking brake is switched between the operating state and the non-operating state by the operation of the operation piece. Embodiment 3 is different from Embodiments 1 and 2 in that when it is detected that the stand bar is not being landed, the parking brake is automatically switched to the non-operating state. Moreover, as with Embodiment 2, Embodiment 3 describes that when the parking brake is operated, the braking force is generated only at the rear wheel brake.

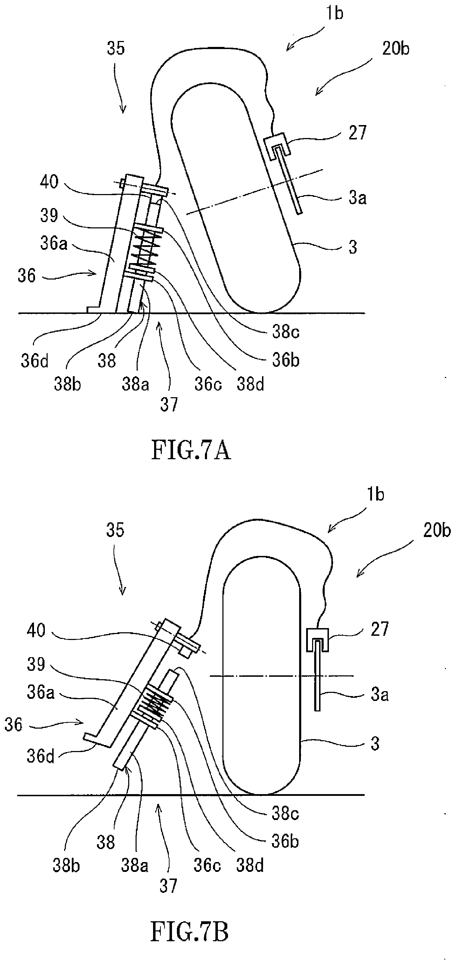

FIGS. 7A and 7B are schematic configuration diagrams each showing a side stand 35 and its periphery. FIG 7A is a diagram showing that a stand bar 36 of the side stand 35 is in the landed state, and FIG 7B is a diagram showing that the stand bar 36 is not being landed but is floating from the ground surface. FIGS. 7A and 7B are diagrams showing a motorcycle 1b of Embodiment 3 when viewed from a rear side.

The side stand 35 includes the stand bar 36 and a detection mechanism 37. The detection mechanism 37 is located inward of the stand bar 36 in the width direction and can detect whether or not the stand bar 36 is in the landed state. The detection mechanism 37 includes a rod-shaped member 38, an elastic member 39, and a pressure sensitive sensor 40. The rod-shaped member 38 extends in a direction that is the same as a direction in which the stand bar 36 extends. The rod-shaped member 38 is movable relative to the stand bar 36 in the direction in which the stand bar 36 extends. The elastic member 39 is arranged so as to surround an outer periphery of the rod-shaped member 38. The stand bar 36 includes a stand bar main body portion 36a and two flange members 36b and 36c. The flange members 36b and 36c extend inward in the width direction from the stand bar main body portion 36a and are fixed to the stand bar main body portion 36a. Moreover, the stand bar 36 includes an end portion 36d which contacts the ground surface when the stand bar 36 is landed.

When the stand bar 36 is in the landed state, the flange member 36b is located at an upper side, and the flange member 36c is located at a lower side. The rod-shaped member 38 is provided so as to penetrate the flange members 36b and 36c of the stand bar 36 in a thickness direction.

The rod-shaped member 38 includes a rod-shaped member main body portion 38a, an end portion 38b, an end portion 38c, and a flange member 38d. The end portion 38b is located closer to the ground surface when the stand bar 36 is in the put-down state. The end portion 38c is located farther from the ground surface when the stand bar 36 is in the put-down state. The flange member 38d is fixedly provided at the rod-shaped member main body portion 38a. The elastic member 39 is provided between the flange member 36b of the stand bar 36 and the flange member 38d of the rod-shaped member 38. In the present embodiment, the elastic member 39 is a spring. Since the elastic member 39 is provided between the flange member 36b of the stand bar 36 and the flange member 38d of the rod-shaped member 38, the rod-shaped member 38 is being biased in a direction toward the ground surface with the stand bar 36 in the put-down state.

In the states shown in FIGS. 7A and 7B, the rod-shaped member 38 is being biased in the direction toward the ground surface. Therefore, when the stand bar 36 is not being landed but is floating as shown in FIG 7B, the rod-shaped member 38 is located closer to the ground surface than the stand bar 36. When the stand bar 36 is in the landed state as shown in FIG 7A, the end portion 38b located closer to the ground surface contacts the ground surface, and the rod-shaped member 38 is pushed upward by the ground surface. Therefore, the rod-shaped member 38 moves upward relative to the stand bar 36. Thus, the position of the rod-shaped member 38 relative to the stand bar 36 is higher than that shown in FIG 7B.

When the rod-shaped member 38 contacts the pressure sensitive sensor 40, the pressure sensitive sensor 40 can detect this contact. When the rod-shaped member 38 moves upward relative to the stand bar 36, the end portion 38c located opposite to the ground surface contacts the pressure sensitive sensor 40. Thus, whether or not the stand bar 36 is in the landed state can be detected by the pressure sensitive sensor 40. As a result, the detection mechanism 37 can detect whether or not the stand bar 36 is in the landed state.

In the present embodiment, the "landed state" of the side stand 35 denotes a state in which the end portion 36d of the stand bar 36 is in contact with the ground surface. Moreover, when the inclination of the motorcycle is reduced (i.e., when the motorcycle is made to stand upright) with the side stand 35 in the put-down state, the end portion 36d of the stand bar 36 separates from the ground surface. At this time, the side stand 35 changes from the landed state to a floating state in which the stand bar 36 floats from the ground surface. When the stand bar 36 separates from the ground surface, the side stand 35 and the stand bar 36 are not in the landed state even though the stand bar 36 is in the put-down state. When the stand bar 36 separates from the ground surface and is flipped up, the side stand 35 and the stand bar 36 are changed to the flip-up state. Therefore, each of the side stand 35 and the stand bar 36 can be set to the floating state that is different form the "landed state" and the "flip-up state." While the side stand 35 and the stand bar 36 are changing from the "landed state" to the "flip-up state," the stand bar 36 once becomes the floating state.

In the present embodiment, in the motorcycle 1b, when the detection mechanism 37 detects that the stand bar 36 is in the landed state, the parking brake 20b can be switched between the operating state and the non-operating state. On the other hand, when the detection mechanism 37 detects that the stand bar 36 is not in the landed state, the parking brake 20b is maintained in the non-operating state, and the parking brake 20b cannot be switched to the operating state.

When the detection mechanism 37 detects that the stand bar 36 is in the landed state, the rider can switch the parking brake 20b between the operating state and the non-operating state by using the operation piece. The operation piece may be the same in configuration as the operation piece 23 of Embodiment 1 or may be provided close to the handle 6 so as to be able to be operated by the rider's hand. Moreover, the operation piece may have the other configuration. When the parking brake 20b has been set to the operating state by using the operation piece, the rear wheel brake caliper 27 stops the rotation of the rear wheel brake disc 3a, and this locks the rotation of the rear wheel 3. When the parking brake 20b has been set to the non-operating state by using the operation piece, the rear wheel brake caliper 27 does not stop the rotation of the rear wheel brake disc 3a, and the rear wheel 3 is maintained in a rotatable state.

When the detection mechanism 37 detects that the stand bar 36 is not in the landed state, the parking brake 20b of the motorcycle 1b is maintained in the non-operating state. Therefore, when the stand bar 36 is changed from the floating state to the flip-up state, the parking brake 20b is surely in the non-operating state.

There is a possibility that although the stand bar 36 is in the flip-up state, the rod-shaped member 38 is moved by, for example, vibration generated during the traveling of the motorcycle 1b and is therefore brought into contact with the pressure sensitive sensor 40, and the motorcycle 1b determines that the stand bar 36 is in the landed state. On this account, there is a possibility that although the motorcycle 1b is traveling, the parking brake 20b becomes such a state as to be able to be set to the operating state. Therefore, in the present embodiment, a stopper member configured to restrict the movement of the rod-shaped member 38 is provided between the rod-shaped member 38 and the pressure sensitive sensor 40 so as to prevent a case where the rod-shaped member 38 is moved by, for example, vibration generated during the traveling of the motorcycle 1b to be brought into contact with the pressure sensitive sensor 40.

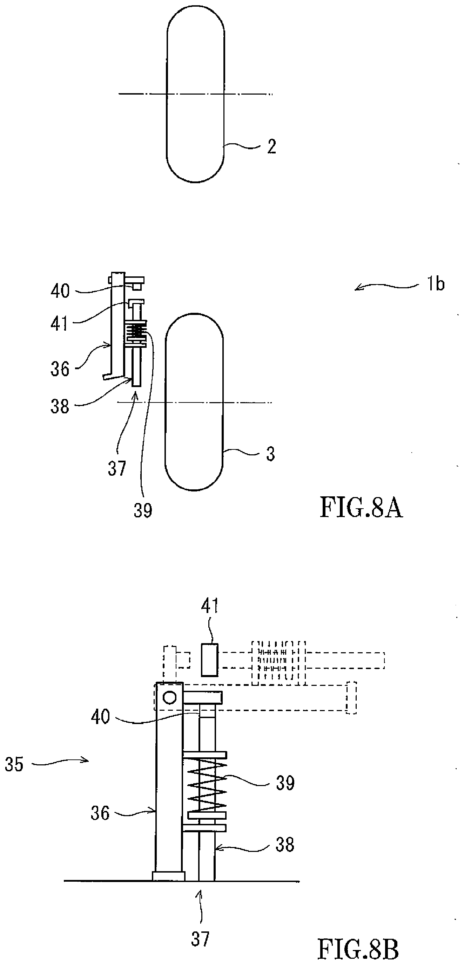

FIG 8A is a schematic plan view showing the motorcycle 1b including a stopper member 41 when viewed from above. FIG 8B is an enlarged side view showing the side stand 35 of the motorcycle 1b including the stopper member 41 and its periphery. In FIG 8B, the side stand 35 in the landed state is shown by a solid line, and the side stand 35 in the flip-up state is shown by a broken line. In the present embodiment, the stopper member 41 is provided at the pivot frame 8 (FIG. 1) of the motorcycle 1b. As shown in FIGS. 8A and 8B, when the stand bar 36 is in the flip-up state, the movement of the rod-shaped member 38 is restricted by the stopper member 41. Since the stopper member 41 is provided at the vehicle body of the motorcycle 1b, the movement of the rod-shaped member 38 can be surely restricted.

Since the stopper member 41 is located between the rod-shaped member 38 and the pressure sensitive sensor 40 when the stand bar 36 is in the flip-up state, the rod-shaped member 38 can be prevented from contacting the pressure sensitive sensor 40. With this, it is possible to surely prevent a case where although the stand bar 36 is in the flip-up state, it is determined that the stand bar 36 is in the landed state.

When the stand bar 36 is in the landed state as shown by the solid line in FIG 8B, the rod-shaped member 38 separates from the stopper member 41, and the rod-shaped member 38 and the pressure sensitive sensor 40 contact each other. With this, it can be surely recognized that the stand bar 36 is in the landed state.

According to the above-described configuration, the motorcycle 1b is configured such that when the stand bar 36 is in the landed state, the motorcycle 1b can be set to the driving disabled state or the driving enabled state by the parking brake 20b. Therefore, for example, when the motorcycle 1b is parked, the state of the parking brake 20b can be selected in accordance with preference of the rider or a situation. When the stand bar 36 is in the flip-up state, the parking brake 20b is surely in the released state, and therefore, the rider can smoothly drives the motorcycle 1b without confusion.

### Other Embodiments

Each of the above embodiments describes that the side stand is used to make the motorcycle stand by itself when the motorcycle is in the stop state. However, the above embodiments are not limited to this. A center stand may be used to make the motorcycle stand by itself when the motorcycle is in the stop state.

Moreover, each of the above embodiments describes that the parking brake is used as the driving preventing device capable of switching between the driving enabled state in which the normal driving of the motorcycle is being enabled and the driving disabled state in which the normal driving of the motorcycle is being disabled. However, the above embodiments are not limited to this. A device other than the parking brake may be used as the driving preventing device.

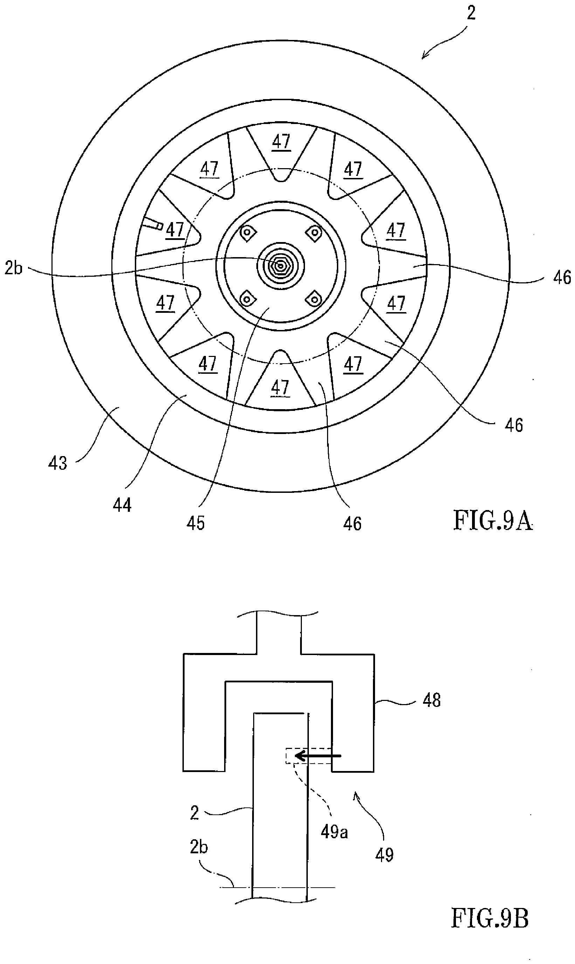

For example, the driving preventing device may include a lock member configured to stop the rotation of the wheel and may stop the rotation of the wheel by inserting the lock member into between a plurality of spokes. FIG 9A is a side view showing the front wheel, and FIG 9B is a sectional view showing the lock mechanism. The lock member may stop the rotation of the front wheel 2 or may stop the rotation of the rear wheel 3. In the present embodiment, the rotation of the front wheel 2 is stopped by the lock member.

FIG 9A is a side view showing the front wheel 2, and FIG 9B is a schematic sectional view showing the front wheel 2 and a lock mechanism 49. As shown in FIG 9A, the front wheel 2 includes: a rim 44 to which a tire 43 is attached; a hub 45 supporting a rotating shaft at a center portion thereof; and a plurality of spokes 46 each connecting the rim 44 and the hub 45. The plurality of spokes 46 are provided at regular intervals in a circumferential direction of the front wheel 2. Gaps 47 are provided between the plurality of spokes 46.

As shown in FIG 9B, the motorcycle includes a cover 48 covering an upper portion of the front wheel 2. The lock mechanism 49 includes a lock member 49a which can project from the cover 48 toward the gap 47 of the front wheel 2. The lock member 49a can project from a portion, opposed to the front wheel 2, of the cover 48 to the front wheel 2 in an axial direction of a rotating shaft 2b corresponding to a rotational center of the front wheel 2. The lock member 49a projecting from the cover 48 extends in the axial direction of the rotating shaft 2b and can enter into the gap 47 of the front wheel 2.

For example, after the rider stops the motorcycle, the rotation of the front wheel 2 can be locked by inserting the lock member 49a into the gap 47 of the front wheel 2. With this, the motorcycle can be set to the driving disabled state in which the normal driving of the motorcycle is being disabled. Thus, the motorcycle can be prevented from being stolen while the motorcycle is in the stop state. Therefore, the motorcycle having excellent security performance can be provided. To be specific, the lock mechanism 49 can serve as the driving preventing device capable of switching between the driving enabled state in which the normal driving of the motorcycle is being enabled and the driving disabled state in which the normal driving of the motorcycle is being disabled.

As above, by inserting the lock member 49a into the gap 47 of the front wheel 2, the rotation of the front wheel 2 is locked and stopped, and thus, the motorcycle is set to the driving disabled state in which the normal driving of the motorcycle is being disabled. Therefore, the configuration of the driving preventing device which switches to the driving disabled state can be simplified.

A device other than the above may be used as the driving preventing device capable of switching the motorcycle between the driving enabled state in which the normal driving of the motorcycle is being enabled and the driving disabled state in which the normal driving of the motorcycle is being disabled. For example, a handle lock mechanism which sets the handle to an operation disabled state in order to realize the driving disabled state may be used as the driving preventing device. Since the driving preventing device is the handle lock mechanism which sets the handle to the operation disabled state in order to realize the driving disabled state, the driving preventing device can switch to the driving disabled state by locking the handle. Thus, the configuration of the driving preventing device which switches the motorcycle to the driving disabled state can be simplified.

The driving preventing device may be configured to set the engine to a start-up disabled state in order to realize the driving disabled state. For example, the driving preventing device sets the engine to a state in which the engine cannot be started up by ignition, and with this, the driving preventing device can set the engine to the start-up disabled state. Thus, the configuration of the driving preventing device which switches the motorcycle to the driving disabled state can be simplified.

Moreover, the above embodiments adopt the motorcycle. However, the above embodiments are not limited to this. A motor tricycle may be adopted as long as it is the lean vehicle.

## Claims

1. A lean vehicle (1a) comprising:
a driving preventing device configured to switch between a driving enabled state in which normal driving of the vehicle (1a) is being enabled and a driving disabled state in which the normal driving of the vehicle (1a) is being disabled;
a stand (16) including an end portion (16b) and configured to swing between a landed state in which the end portion (16b) is in contact with a ground surface and a flip-up state and, in the landed state, make the vehicle (1a) stand by itself while the vehicle (1a) is in a stop state; and
an operation piece (34) that is movable between a driving enabled position and a driving disabled position and sets the driving preventing device to the driving enabled state when the operation piece (34) is at the driving enabled position and sets the driving preventing device to the driving disabled state when the operation piece (34) is at the driving disabled position, wherein:
when the stand is in the landed state, the operation piece (34) is allowed to move between the driving enabled position and the driving disabled position, thereby allowing the driving preventing device to be switched between the driving enabled state and the driving disabled state; and
when the stand is in the flip-up state, the operation piece (34) interferes with the stand to be maintained at the driving enabled position, thereby maintaining the driving preventing device in the driving enabled state,
**characterized in that**, when the operation piece (34) is at the driving disabled position, the operation piece (34) interferes with the stand in such a way that the operation piece (34) serves as a stopper which blocks the movement of the stand, thereby preventing the stand from becoming the flip-up state.

2. The lean vehicle (1a) according to claim 1, wherein the driving preventing device is a parking brake (20a) configured to stop rotation of a wheel (2, 3) by braking in order to realize the driving disabled state.

3. The lean vehicle (1a) according to claim 1, further comprising a wheel (2, 3) including:
a rim (44) to which a tire is attached;
a hub (45) supporting a rotating shaft at a center portion thereof; and
a plurality of spokes (46) each connecting the rim (44) and the hub (45), wherein:
the driving preventing device is a lock mechanism (49) including a lock member (49a) extending in an axial direction of the rotating shaft corresponding to a rotational center of the wheel (2, 3), the lock member (49a) being configured to stop rotation of the wheel (2, 3), wherein
in order to realize the driving disabled state, the driving preventing device inserts the lock member (49a) between the plurality of spokes (46) to stop the rotation of the wheel (2, 3).

4. The lean vehicle (1a) according to claim 1, wherein the driving preventing device is a handle lock mechanism configured to set a handle (6) to an operation disabled state in order to realize the driving disabled state.

5. The lean vehicle (1a) according to claim 1, wherein the driving preventing device sets a prime mover (E) to a start-up disabled state in order to realize the driving disabled state.

6. The lean vehicle (1a) according to any one of claims 1 to 5, wherein the stand is a side stand (15).

## Patentansprüche

1. Neigungsfahrzeug (1a), umfassend:
eine Fahrverhinderungsvorrichtung, die konfiguriert ist, um zwischen einem Fahraktivierungszustand, in dem das normale Fahren des Fahrzeugs (1a) aktiviert ist, und einem Fahrdeaktivierungszustand, in dem das normale Fahren des Fahrzeugs (1a) deaktiviert ist, umzuschalten;
einen Ständer (16), der einen Endabschnitt (16b) einschließt und konfiguriert ist, um zwischen einem gelandeten Zustand, in dem der Endabschnitt (16b) mit einer Bodenoberfläche in Kontakt ist, und einem hochgeklappten Zustand zu schwingen und in dem gelandeten Zustand dafür zu sorgen, dass das Fahrzeug (1a) von selbst steht, während das Fahrzeug (1a) in einem Stoppzustand ist; und
ein Bedienteil (34), das zwischen einer Fahraktivierungsposition und einer Fahrdeaktivierungsposition beweglich ist und die Fahrverhinderungsvorrichtung in den Fahraktivierungszustand versetzt, wenn das Bedienteil (34) in der Fahraktivierungsposition ist, und die Fahrverhinderungsvorrichtung in den Fahrdeaktivierungszustand versetzt, wenn das Bedienteil (34) in der Fahrdeaktivierungsposition ist, wobei:
wenn der Ständer in dem gelandeten Zustand ist, sich das Bedienteil (34) zwischen der Fahraktivierungsposition und der Fahrdeaktivierungsposition bewegen kann, wodurch die Fahrverhinderungsvorrichtung zwischen dem Fahraktivierungszustand und dem Fahrdeaktivierungszustand umgeschaltet werden kann; und
wenn der Ständer in dem hochgeklappten Zustand ist, das Bedienteil (34) in den Ständer eingreift, so dass dieser in der Fahraktivierungsposition gehalten wird, wodurch die Fahrverhinderungsvorrichtung in dem Fahraktivierungszustand gehalten wird,
**dadurch gekennzeichnet, dass**, wenn das Bedienteil (34) in der Fahrdeaktivierungsposition ist, das Bedienteil (34) in den Ständer derart eingreift, dass das Bedienteil (34) als ein Stopper dient, der die Bewegung des Ständers blockiert, und dadurch verhindert, dass der Ständer in den hochgeklappten Zustand gelangt.

2. Neigungsfahrzeug (1a) nach Anspruch 1, wobei die Fahrverhinderungsvorrichtung eine Parkbremse (20a) ist, die konfiguriert ist, um eine Rotation eines Rades (2, 3) durch Bremsen zu stoppen, um den Fahrdeaktivierungszustand zu realisieren.

3. Neigungsfahrzeug (1a) nach Anspruch 1, ferner umfassend ein Rad (2, 3), das einschließt:
eine Felge (44), an der ein Reifen befestigt ist;
eine Nabe (45), die in einem Mittelabschnitt davon eine Rotationswelle trägt; und
eine Vielzahl von Speichen (46), die jeweils die Felge (44) und die Nabe (45) verbinden, wobei:
die Fahrverhinderungsvorrichtung ein Sperrmechanismus (49) ist, der ein Sperrelement (49a) einschließt, das sich in einer axialen Richtung der Rotationswelle erstreckt, die einem Rotationszentrum des Rades (2, 3) entspricht, wobei das Sperrelement (49a) konfiguriert ist, um die Rotation des Rades (2, 3) zu stoppen, wobei,
um den Fahrdeaktivierungszustand zu realisieren, die Fahrverhinderungsvorrichtung das Sperrelement (49a) zwischen die Vielzahl von Speichen (46) einsetzt, um die Rotation des Rades (2, 3) zu stoppen.

4. Neigungsfahrzeug (1a) nach Anspruch 1, wobei die Fahrverhinderungsvorrichtung ein Griffsperrmechanismus ist, der konfiguriert ist, um einen Griff (6) in einen Bediendeaktivierungszustand zu versetzen, um den Fahrdeaktivierungszustand zu realisieren.

5. Neigungsfahrzeug (1a) nach Anspruch 1, wobei die Fahrverhinderungsvorrichtung eine Antriebsmaschine (E) in einen Startdeaktivierungszustand versetzt, um den Fahrdeaktivierungszustand zu realisieren.

6. Neigungsfahrzeug (1a) nach einem der Ansprüche 1 bis 5, wobei der Ständer ein Seitenständer (15) ist.

## Revendications

1. Véhicule (1a) inclinable comprenant :
un dispositif empêchant la conduite configuré pour commuter entre un état de conduite autorisée dans lequel la conduite normale du véhicule (1a) est autorisée et un état de conduite non autorisée dans lequel la conduite normale du véhicule (1a) est non autorisée ;
une béquille (16) comportant une partie d'extrémité (16b) et conçue pour basculer entre un état posé dans lequel la partie d'extrémité (16b) est en contact avec une surface au sol et un état rabattu et, à l'état posé, pour faire tenir le véhicule (1a) debout par lui-même tandis que le véhicule (1a) est dans un état d'arrêt ; et
une pièce de fonctionnement (34) qui est mobile entre une position de conduite autorisée et une position de conduite non autorisée et qui place le dispositif empêchant la conduite dans l'état de conduite autorisée lorsque la pièce de fonctionnement (34) est en position de conduite autorisée et qui place le dispositif empêchant la conduite dans l'état de conduite non autorisée lorsque la pièce de fonctionnement (34) est en position de conduite non autorisée, dans lequel :
lorsque la béquille est à l'état posé, le déplacement de la pièce de fonctionnement (34) entre la position de conduite autorisée et la position de conduite non autorisée est permis, permettant ainsi au dispositif empêchant la conduite d'être commuté entre l'état de conduite autorisée et l'état de conduite non autorisée ; et
lorsque la béquille est à l'état rabattu, la pièce de fonctionnement (34) interfère avec la béquille pour être maintenue en position de conduite autorisée, maintenant ainsi le dispositif empêchant la conduite dans l'état de conduite autorisée,
**caractérisé en ce que**, lorsque la pièce de fonctionnement (34) est en position de conduite non autorisée, la pièce de fonctionnement (34) interfère avec la béquille de telle sorte que la pièce de fonctionnement (34) sert de butée qui bloque le mouvement de la béquille, empêchant ainsi la béquille d'adopter l'état rabattu.

2. Véhicule (1a) inclinable selon la revendication 1, dans lequel le dispositif empêchant la conduite est un frein de stationnement (20a) conçu pour arrêter une rotation d'une roue (2, 3) en freinant afin de réaliser l'état de conduite non autorisée.

3. Véhicule (1a) inclinable selon la revendication 1, comprenant en outre une roue (2, 3) comportant :
une jante (44) sur laquelle est fixé un pneu ;
un moyeu (45) supportant un arbre rotatif au niveau d'une partie centrale dudit moyeu ; et
une pluralité de rayons (46), chacun reliant la jante (44) et le moyeu (45), dans lequel :
le dispositif empêchant la conduite est un mécanisme de verrouillage (49) comportant un élément de verrouillage (49a) s'étendant dans une direction axiale de l'arbre rotatif correspondant à un centre de rotation de la roue (2, 3), l'élément de verrouillage (49a) étant conçu pour arrêter la rotation de la roue (2, 3), dans lequel
afin de réaliser l'état de conduite non autorisée, le dispositif empêchant la conduite insère l'élément de verrouillage (49a) entre la pluralité de rayons (46) pour arrêter la rotation de la roue (2, 3).

4. Véhicule (1a) inclinable selon la revendication 1, dans lequel le dispositif empêchant la conduite est un mécanisme de verrouillage de poignée conçu pour placer une poignée (6) dans un état de fonctionnement non autorisé afin de réaliser l'état de conduite non autorisée.

5. Véhicule (1a) inclinable selon la revendication 1, dans lequel le dispositif empêchant la conduite place un moteur principal (E) dans un état de démarrage non autorisé afin de réaliser l'état de conduite non autorisée.

6. Véhicule (1a) inclinable selon l'une quelconque des revendications 1 à 5, dans lequel la béquille est une béquille latérale (15).
